# EUROPEAN PATENT SPECIFICATION

(11) **EP 0 510 789 B1**
(45) Date of publication and mention of the grant of the patent: **12.03.1997**
(21) Application number: 92300781.9
(22) Date of filing: 30.01.1992
(51) Int. Cl.: H04B 7/195

(54) **Cellular telephone satellite system**
Zellulares Telefonsatellitensystem
Système de téléphone cellulaire par satellite

(30) Priority: 22.04.1991 US 688412
(43) Date of publication of application: 28.10.1992
(73) Proprietor: TRW INC., Cleveland Ohio 44124 (US)
(72) Inventor: Horstein, Michael, Los Angeles, California 90049 (US); Cress, Peter H., Manhattan Beach, California 90266 (US)
(74) Representative: Schmidt, Steffen J., Dipl.-Ing.

(56) References cited:
- EP-A- 0 237 009
- EP-A- 0 331 567
- EP-A- 0 365 885
- US-A- 3 340 531
- US-A- 3 349 398
- US-A- 3 384 891
- US-A- 3 497 807
- US-A- 4 189 675
- US-A- 4 872 015
- Walker, "Continuous Whole-Earth Coverage by Circular-Orbit Satellite Patterns", Technical Report 77044 of the R.A.E., Farnborough Hants, UK, March 1977
- Walker, "Circular Orbit Patterns Providing Continuous Whole Earth Coverage", Technical Report 70211 of the R.A.E., Farnborough, Hants, UK, November 1970;
- Lang et al, "Orbital Constellations which Minimize Revisit Time" AAS Astrodynamics Specialist Conference, Lake Placid,August 22 - 25 1983, paper AAS 83402, pp. 1070-1086;
- Lang, "Symmetric Circular Orbit Satellite Constellations For Continuous Global Coverage", AAS Astrodynamics Specialist Conference, Kalispell, Montana, August 10 - 13 1987, paper AAS 87-499, pages 1111-1132
- TRW Space Log 1957 to 1991 published by the Space and Technology Group of TRW's Space and Defense Sector, Redondo Beach, California, 1992
- "Communications Satellite Systems", by James Martin, published by Prentice-Hall International INC., London, 1978, pages 41 to 45
- Walker: Continuous Whole Earth Coverage by Circular Orbit Satellites, IEEE Conference Publication 95, "Satellite Systems for Mobile Communication and Surveillance" 1973, pages 35 to 38
- Horstein: "Land Mobile Communications Satellite System Design", AIAA-84-0753, 1984,pages 467-475
- Thiel, "Medium Altitude Phased Orbit Satellite Systems"; Proceedings Electronics in Transition, Vol. 4, 6th Winter Convention on Military Electronics, Los Angeles 3-5 Feb 1965, pages IIC-17 to IIC-24, 1965, L.A. District, IEEE
- "A Medium Altitude Random Orbit Communications Satellite System" - Eugene F. O'Neill, Electronics in Transition, Vol. 4, 6th Winter Convention on Military Electronics, Los Angeles 3-5 Feb 1965, page IIC-1, 1965, L.A. District, IEEE
- "Spin Stabilized, Synchronous Orbit Satellites" - Dr. Harold A. Rosen, Electronics in Transition, Vol. 4, 6th Winter Convention on Military Electronics, Los Angeles 3-5 Feb 1965, pages IIC-2 to IIC-26, Copyright 1965, L.A. District, IEEE
- "Economic Factors Affecting the Introduction of World wide Communication Satellite Service" - Siegfried H. Reiger, Electronics in Transition, Vol. 4, 6th Winter Convention on Military Electronics, Los Angeles 3-5 Feb 1965, pages IIC-27 to IIC-39, 1965, L.A. District, IEEE
- "Future Trends in Satellite Communication" - W. E. Morrow, Jr., Electronics in Transition, Vol. 4, 6th Winter Convention on Military Electronics, Los Angeles 3-5 Feb 1965, pages IIC-40, 1965, L.A. District, IEEE
- "Spacecraft Electronics in the Van Allen Belts", Denney, TRW Space Technology Laboratories, "Abstract", 6th Winter Convention on Military Electronics, Los Angeles 3-5 Feb 1965, page IIIB-103
- "Taking A Flyer In Outer Space", Newsweek, pages 85-90, March 16, 1964;"Live via Satellite" - A.M. Tedeschi, Arthur C. Clarke, pages 19-36, 1989
- "The Beginnings of Satellite Communications" - J.R. Pierce, p. 28, 29, 1968
- "Commercial satellite communication" - R. E.O. Back et al, Proc. IEEE Rev., Vol. 119, No.8R, Aug 1972
- Ballard, "Rosette Constellations of Earth Satellites", IEEE, Vol. AES16, No. 5, pages 656-673(1980)
- "Space Handbook", published by Air University Press Alabama, USA, January 1985, pages I-9 to I-11
- "McGraw-Hill Encyclopedia of Science and Technology" published 1987, pages 144 - 147;
- Kinnison et al.: "Estimation of the charged particle environment for earth orbits", published in John Hopkins APL Technical Digest, Volume 11, numbers 3 and 4 (1990) pages 300 to 309"
- Griffin and French: "Space Vehicle Design", published by the AIAA, Ohio, US, 1991, pages 41 - 82
- Wertz and Wiley: "Space Mission analysis and design", published by Kluwer Academic Publishers, The Netherlands, 1991, pages 144 - 146 and 164; pages163 to 166 and 171 to 180 inclusive
- "Voice across the sea" - Arthur C. Clarke, p. 196 - 205, 1974
- "Die grenzenlose Dimension - Raumfahrt" - Harry O. Ruppe, pages 279-291, 1980
- "Satellite Transmission Systems" - James B. Potts, pages 17 - 30, 1993
- "Communications Satellites: The Experimental Years" - B.I.Edelson, Acta Astronautica, Vol. 11, No. 7-8, pp. 407-413, 1984
- CCIR report 206-1, "Technical Characteristics of Communication - Satellite Systems" datestamped 8th November 1967.
- "Design Guide to Orbital Flight", Jensen et al., McGraw-Hill, date-stamped 1st January 1964, pages 96 - 101 and 115.
- Collins English dictionary, Second Edition, reprinted 1989, page 1675, "Van Allen Belt".
- Before the FCC, Washington, D.C., Application of STARSYS Inc. for a low earth orbit (LEO) satellite System "STARNET" - May 4, 1990.
- Before the FCC, Washington, D.C., Application of Ellipsat Corp. for authority to construct "ELLIPSO 1" an elliptical orbit satellite system - November 2, 1990.
- Application of Volunteers in Technical Assistance, Inc. for authority to construct a non-profit international low earth orbit satellite system submitted to FCC, Washington, D.C., "VITASAT" November 21, 1990.
- Before the FCC, Washington, D.C. in re application of Motorola Satellite communications, Inc. for authority to construct, launch and operate a low earth satellite system "IRIDIUM", December 03, 1990
- Before the FCC, Washington, D.C., in re application of Loral Cellular System, Corp. for authority to construct a low earth satellite system "GLOBALSTAR" June 03, 1991.
- Before the FCC, Washington, D.C., "ARIES" low earth orbit satellite system proposal of Constellation Communications, Inc., June 03, 1991
- ORBCOMM application to the FCC, Washington, D.C., for authority to construct a low earth mobile satellite system - "ORBCOMM" February 28, 1990.
- AMSC Subsidiary Corporation application to the FCC to modify its space station authorization to construct and operate its satellite location at 62 W.L. to add the 1515-1525 MHZ (downlink) band and the 1616.5-1626.5 MHZ (uplink) band, dated June 3, 1991.
- Before the FCC, Washington, D.C., Application of TRW Inc. for authority to construct a new communications satellite system "ODYSSEY" - May 31, 1991
- FCC Report No. DS-1068 Public Notices of April 1, 1991 and April 18, 1991
- AMSC's request with the FCC to change the orbit constellation from GEO to MEO November 16, 1994.
- FCC Public Notice, Report No. DS-1134, Dated October 24, 1991.
- FCC, E.T. Docket No. 92-28, FCC 95-71, pp. 31-34, 30/03/95
- Aiken, J.G. et al.: "LEO Satellite-Based Telecommunication Network Concepts", Proc. Workshop on advanced Network and Technology Concepts for Mobile, Micro and Personal Communications, 30-31st May 1991; JPL Publication 91-35, published September, 1991, pages 41 to 53.
- E. Hess, "Project 21: LEO, MEO or GEO?" published in Satellite Communications, October 1993, pages 42, 44 and 46.
- "ICO System Description" published by ICO Global Communications, Lonson, U.K., October 1995.
- "Satellite Communication Systems Engineering", Pritchard et al., Prentice Hall, date-stamped 11th June 1993, pages 86 to 92.
- Rusch et al.: "Odyssey, A Constellation For Personal Communications", 14th AIAA International Communication Satellite Systems Conference & Exhibit, March 22-26, 1992, Washington, USA; AIAA-92-2060, pages 1 to 10.
- Brown, "Spacecraft mission design", published by AIAA, Washington, USA, 1992, pages 81 - 94;
- Blake et al., "Identification of an Unexpected Space Radiation Hazard", IEEE Transactions on Nuclear Science, Vol. 39, No. 6, December 1992, pages 1761 to 1764
- Logsdon, "Mobile Communication Satellites", published by McGraw-Hill Inc. New York, USA, 1995, pages 129-147, and 201-209.

## Description

The present invention relates to a cellular telecommunications system according to the preamble of claim 1, and to a method of cellular telecommunication according to claim 15.

Cellular telecommunications systems allow a mobile telephone user to selectively communicate with other users at fixed land based telephone stations served by the central telephone network and with other mobile stations similarly served. This includes both local and long distance calls. The telephone link between the mobile and land based central telephone exchange is wireless; the communication link is radio frequency energy, "RF", typically in the ultra high frequency range. The cellular telephone system takes advantage of RF technology inherent in radio communications and broadcasting to transfer information in electronic form from one selected location to another without using telephone wires between the two locations. In voice communication, the RF serves as a carrier that is modulated with the users voice, an audio frequency, spoken into a microphone. At the other connected station, the RF carrier is received and demodulated to produce an audio signal. That audio signal is fed to a small loudspeaker which reproduces the original speakers voice'at that location. Though the cellular link is RF, the cellular portion of the telephone system is integrated with remaining portions containing telephone lines and conventional telephone equipment.

Telephonic communication systems, including cellular, moreover, as distinguished from broadcasting systems, allows the user at any one station, the calling station, to selectively establish a telephone connection or link with another station, the called station, from among millions of possible stations in the systems to allow bilateral communication with the called station. The called station is selected by dialing its telephone number. Hence a dial switching and routing network equipment that responds to the callers "dial pulses" to establish the link to the called station represented by the dial pulse information, is characteristic of all telephone systems. In many countries, moreover, telephone systems are typically commercial in character. Hence, the customer accordingly must be billed and pay for the call that was placed. The amount of the billing statement for the call depends principally upon time and distance for the call and related taxes imposed by government. Thus billing equipment for determining and printing the customers bill for a call is also characteristic of telephone systems. Those equipment features of telephone systems presented here as background are known to the skilled reader and need not be discussed at length. Those features are understood as being implicit within the present cellular system, even though not discussed in further detail.

All such cellular telephone systems known to applicants are land based. That is the mobile cellular station is linked to the central telephone exchange by means of local land based stations, some of which may be located at the central exchange, that are capable of transmitting RF to and receiving RF from the mobile station within the range of coverage. These fixed land based cellular equipment, as serve to interact with the mobile unit, are for the most part located atop tall buildings or towers at various locations in, say, the community so as to be better accessible to signals from the lower power mobile station.

Governed by commercial cost and profit considerations, existing cellular systems provide mobile voice communications within the most populous areas of the U.S.A. and Europe. other areas within those countries are essentially excluded by the poor economics. Thus cellular systems are not presently offered in other geographic areas of the world that are more sparsely populated, even though the population in total over those areas is significant. Much as the high cost of installing copper wire lines over long distances precluded private telephone business from extending the telephone line of ordinary telephone systems to the rural areas of the U.S.A. in the early part of the twentieth century until government incentives were provided, like economic consideration stalls private concerns from the introduction of existing cellular technology into such more sparsely populated areas. Progress in adding cellular system installations to those other geographic regions awaits more positive economics. Either government incentives must be provided, usually for reasons unrelated to economics, the cost of existing cellular technology falls as a consequence of higher volume production, or newer more lower cost technology is developed which makes installation of cellular systems in the more sparsely populated regions of the world commercially feasible.

To the latter end, an aspect of the present invention, as becomes apparent from reading this specification, has the advantage of providing an improved technology that is particularly able to serve more sparsely populated areas with cellular telephone communications on a commercially feasible basis, while also serving the more populated areas.

To achieve this advantage, the invention employs communication satellite constellations; that is geometric arrangements of a number of telecommunications satellites in relative spaced positions about the planet.

Telecommunications satellites traveling in geostationary orbits are found in current use in long distance toll telephone networks. They provide telephone links that extend over long distances, such as spanning the oceans. Geostationary satellites orbit the earth with the same 24 hour period within which the earth rotates on its axis; the satellite is geosynchronous. Moving thus with the same speed as the earth, to an observer on the earth the satellite appears to remain stationary. In many instances those geostationary satellites provide an alternative link to the underseas fiber optic telephone cables and in other instances the satellites may be the only link. Unfortunately each such satellite is possible of only limited coverage of the earth.

The cellular system of the present invention employs telecommunications satellites which are placed in selective non-synchronous orbits about the earth. And the latter may be used in conjunction with other communications links for long distance intercontinental communications.

Mobile satellite communications for ships and some aircraft are presently available with INMARSAT, owned by the International Maritime Satellite organization. Satellite systems of the American Mobile Satellite Company and that Of Telesat Mobile, Inc. are understood to be in development. Geostar, Locstar are systems to provide mobile communications. Eutel Tracs is a system which will allow surveillance tracking of vehicles. When completed and launched within the next five years, such systems will offer mobile communications in North America. The foregoing proposed systems all use geostationary satellites and, hence, require heavy, bulky and costly mobile transponders.

Although regular telephone users of international telephone service recognize the substantial achievements made in telephone communications between the major industrialized countries in more recent years, particularly in achieving satisfactory audio volume and clarity of voice in voice communications, not everyone is entirely pleased with all aspects of those communications. In those telephone calls one notices that one cannot easily interject a comment in a conversation; there is a time delay, typically on the order of a quarter of a second, two hundred and fifty milliseconds, between the sending of a sound at one telephone station and its receipt at the remotely located second station. Thus the conversation becomes more difficult, perhaps annoying to some. And telephone users are not quick to adapt to that annoying propagation delay. Since most telephone calls are local in nature and, in those telephone calls a perceptible delay does not occur, the ordinary user is effectively trained for the protocol of local telephone calls, training which is difficult to "shake" for the occasional long distance call. Because of the one quarter of a second propagation delay occurring at the 35 786 Km (19,323 nautical mile) geostationary altitude, the "one hop" time, the voice transmission quality of the foregoing geostationary satellite systems is perceived as degraded in comparison to that available on the local telephone toll network and even degraded in respect to the land based underseas telephone repeater cables, extending perhaps 10,000 mile between continents. Although endured in international communications, the annoyance is undesirable and should be avoided in local calls. As an advantage, the present invention avoids introducing the extended time delay inherent in geostationary satellites.

Others have sought to address that propagation delay. The Motorola Company, Schaumberg, Illinois, recently announced a worldwide mobile cellular communications system, named Iridium, which-uses telecommunications satellites placed in non-stationary orbits. Though exact details of the proposal are not known and the system has not as yet been placed into practice some of the general aspects of that proposal are worthwhile considering further. The Iridium system is to employ seventy seven separate communications satellites that are placed in "low earth" orbit, that is circular orbits whose altitude from the surface is only 765 Km (four hundred and thirteen nautical miles). Each satellite will have the capability of communicating with another satellite as necessary to achieve the communication link. As the distance between a satellite in the Iridium constellation and a cellular station on the ground is low relative to a higher altitude geosynchronous satellite, the RF propagation time from one telephone station to another is less. As a result, the time delay in voice transmission between stations in that system should be imperceptible. With imperceptible time delay, the voice transmission quality in the Iridium system would thus appear high in contrast to those which incorporate geostationary satellites. The telephone user may converse with another in the ordinary manner as learned on existing local land based telephone networks. It may be noted that an advantage to the present invention is that the delay time described for geostationary satellites is substantially reduced and, in most cases, like in the proposed Iridium system, is not perceptible.

The proposed Iridium system requires large numbers of satellites. The system, moreover, is complex and costly, considering the launching of a large number of satellites and in operation is expected to require frequent changing of the crosslink configurations between the satellites.

Independent of any particular application, a number of investigators theretofore presented mathematical studies of potential satellite constellations to determine the minimum number of satellite s as would provide single or double coverage of all locations on this earth. One of those investigators was Mr. J. G. Walker and, accordingly, some circular constellations are sometimes referred to as Walker constellations. Walker generally defines constellations for satellite in a Report entitled "Continuous Whole-Earth Coverage-by Circular-orbit satellite Patterns", Technical Report 77044 prepared for the Royal Aircraft Establishment, March 1977, available from the Defense Technical Information Center ("DTIC"). One is impressed with the large number of satellite constellations as might be defined for minimum satellite numbers and at least single whole earth coverage using Walker's criteria. Another investigator was Mr. John E. Draim who determined that the minimum number of satellites in ' a specific constellation of his definition capable of providing worldwide coverage was four. Draim thereby reduced by one the minimum number of five satellites, earlier thought to be the minimum in accordance with a prior mathematical criteria defining a different constellation.

As example in U.S. 4,854,527 granted August 8, 1989, as made known to applicants following the present invention, Draim prescribes a four satellite constellation that provides world wide coverage in which the satellites travel in four separate elliptical orbits, each with the same period, with those satellites at all times defining a tetrahedron, no side of which intersects the earth.

Although the foregoing work of Walker and Draim are of interest in their goals and analysis, they do not address the specific requirements of cellular communications systems.

EP-A-0 365 885 A2 discloses a low earth orbit cellular telecommunications system. Here, a minimum of forty-eight (48) satellites distributed in three (3) through eight (8) highly inclined orbits provide satisfactory earth coverage. A preferred embodiment uses eight (8) satellites in six (6) orbits.

In this context it is important to note that this document does not specify the number of the satellites per orbit and the number of orbits, but only the minimum total number of forty-eight satellites that are to be distributed in three through eight highly inclined orbits. Moreover it is mentioned that lower inclined orbits require substantially more satellites.

EP-A-0 237 009 A2 discloses a satellite telecommunications system comprising three elliptical highly inclined geostationary orbits. In each orbit, there is one satellite. The problem to be solved with this configuration is completely different from the problem underlying the present invention.

RCA Review vol. 24, September 1963, Princeton, N.J., (USA) pages 293 - 324; DGC Luck: 'System Organization For General Communication Via Medium Altitude Satellites' discloses a study regarding geometrical requirements of a medium earth orbit satellite constellation which is in contact with a specific number of post offices that collect and sort communication traffic and forward same to the satellites and receive this communication traffic from the satellites for distribution to end-users. This study is based on the assumption that no end-user can directly communicate with a satellite and that each post office must keep one antenna continuously trained on one satellite. The post office stations require very specific geographical locations in order to provide for global coverage. This document does not provide any teaching for a technical enablement to solve the problems underlying the present invention.

The present invention combines the benefit of mobile cellular telephones with the technological advantage of the space borne communications satellites. Accordingly, an object of the invention is to provide mobile cellular telephone system capable of hemispheric and worldwide coverage, both in heavily populated regions and sparsely populated regions, on a cost effective quality basis using satellite constellations permitting direct access by the mobile cellular station and permitting telephone conversations to be carried on between stations in at least local zones or regions without annoying time delays between transmission and reception of voice messages.

### Summary of the Invention.

The above object is met by a system according to Claim 1 and a method according to Claim 15.

In a preferred embodiment of the invention, the constellation is formed of twelve satellites arranged in three orbital planes of four satellites each. Within each orbital plane the four satellites are evenly spaced and travel in the same direction and at the same velocity in a circular shaped orbit at an altitude of 10400 Km (5,600 nautical miles) above the planet. With such constellation each user worldwide receives double coverage.

The foregoing and additional objects and advantages of the invention together with the structure characteristic thereof, which was only briefly summarized in the foregoing passages, and additional structure, becomes more apparent to those skilled in the art upon reading the detailed description of a preferred embodiment and the accompanying claims, which follow in this specification, taken together with the illustrations thereof presented in the accompanying drawings.

### Brief Description of the Drawings.

In the Drawings:
Figure 1 illustrates in symbolic form a cellular telephone system containing the invention;
Figure 2 symbolically illustrates a telecommunications satellite constellation having circular orbits for single coverage used in connection with the embodiment of Fig. 1; and
Figure 3 symbolically illustrates another form of the satellite constellation of Fig. 2 to provide double coverage.

### Detailed Description of the Preferred Embodiments.

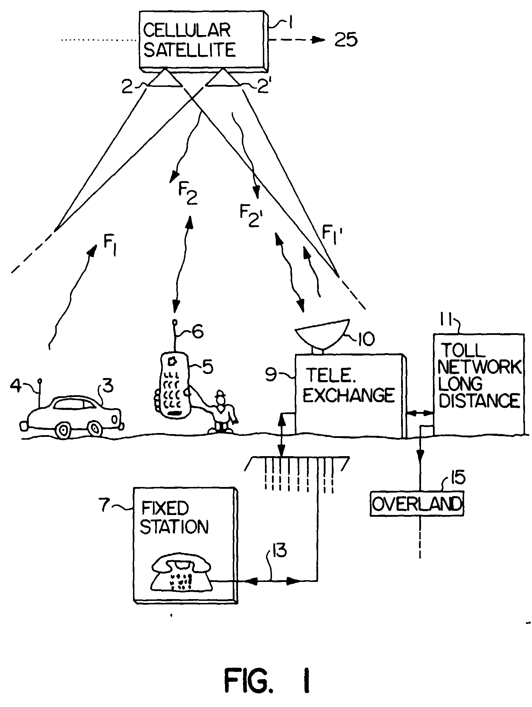

The present system is partially illustrated symbolically in Figure 1 within a telecommunications system to which reference is made. A cellular telecommunications satellite 1 is shown moving in orbit traveling to the right at an appropriate velocity. The satellite carries down looking antennas 2 and 2' for transmitting and receiving, respectively, RF signals from land based cellular telephone equipment.

As represented in the figure, a mobile cellular station is carried within vehicle 3 and has cellular access via omnidirectional antenna 4; a hand held transportable cellular station 5 is carried by an individual and that station accesses cellular communication via omnidirectional antenna 6; and a fixed telephone station is represented in block 7. Each of those ground based elements in the region illustrated has satellite 1 in view at an elevation angle of at least ten degrees. Those elements are within the satellites coverage. The telephone exchange 9 is represented as containing also the cellular communications equipment, signified by antenna 10. Telephone exchange 9 accesses fixed station 7 via land based telephone line 13 and may access many other fixed stations, as is conventional, over additional telephone lines as is partially generally illustrated in the figure. The central telephone station has access to long distance circuits as well through a long distance toll network 11. Toll network 11 is responsible for selecting the appropriate circuits to permit access to the called party and may be carried out, depending on the called parties location over overland telephone lines, represented as 15. It is recognized that additional mobile cellular stations are included in the cellular system, but need not be illustrated.

As is apparent, satellite 1 is one of a number of satellites in a constellation hereafter discussed in greater detail with respect to subsequent figures and is the one of the satellites in that constellation that is traveling at a height of 10400 Km (5600 nautical miles) in altitude above the earth in a circular orbit, as example, providing RF coverage to the underlying stations illustrated. As the satellite moves out of range of view of the ground based stations, another satellite of the constellation enters the range and take its place, the latter thereafter providing the same function in the cellular system communication link as the former. This is hereafter described in greater detail.

At a minimum, a telecommunications satellite is designed to receive RF of one frequency band, say Fl, at its receiving antenna from a geographic area over which the satellite has coverage, translate that to an intermediate frequency, IF, and amplify that IF, and then convert the signal to another frequency for output, say F2, at a transmitting antenna to the same geographic area. It is effectively a repeater, characterized by some as a "dumb" satellite, and does not attempt to obtain the base band information, the voice, data and/or switching messages that are contained in the incoming RF. Other more sophisticated or "smart" satellites, as those skilled in the art appreciate, may do more. Some satellite designs may include multiple RF output beams independently directed to selected portions of the covered area. In those designs the incoming signal is processed within the satellite to decode the baseline information to determine whether the station to be reached is in the area of the first or second beam and then select the appropriate beam for output.

When an RF carrier is modulated, the modulation often carries information, whether that information is analogue audio information, such as the spoken word, or digitized audio information, or digital data signals. The content of that information is the meaning which the spoken word conveys and/or the substance that the data is intended to reveal. As example the telephone number of the called station is sent by pressing the dial keys. All such information may be referred to as "baseband" information. As example, the telephone exchange demodulates the RF and extracts the baseband information and then processes and acts upon that information, in the case of a dialed number, by establishing the connection to the called station.

Presently available "dumb" satellites capable of working in this invention may have output powers and, importantly, receiving sensitivity and antennas, which permits reception of mobile cellular signals generated with power levels as low as one half watt emitted from an omnidirectional antenna and transmission to that mobile station. Design considerations for achieving satellites with those characteristics are known. As recognized by those skilled in the art, the power requirements for both transmitting and receiving for quality transmission depend greatly upon antenna size; the larger the antenna the better the transmission. Certainly telecommunications satellites used at geostationary altitudes have RF power of 600 Watts with those antennas may be used in the present system. For the satellites of the disclosed systems the satellite launch weight will range from 1091 to 1364 Kg (2400 to 3000 pounds). Its power consumption will be on the order of 2,600 Watts, of which 1,500 Watts is for the downlink transmitters to the mobile units. The satellite contains an antenna of appropriate size to enable communication with one half watt power mobile cellular stations and for communication with the ground based stations.

It is noted that present communications protocols call for "down link" transmission from the satellite, F1, to be in the range of frequencies of 1.4 - 1.5 GHz and "up link" transmission to the satellite from a mobile station, F2, to be in the range of 1.5 to 1.6 GHz. Both such frequency ranges are commonly referred to as L-Band frequencies. A different choice of frequencies is prescribed for the communications link to a fixed station, such as the telephone exchange 11, which are in Ku-Band. For that down link the frequency, F1, is 11.7 to 12 GHz in range and the associated up link frequency, F2, is 14 to 14.5 GHz. And while transmissions to and from individual stations have been referred to generally as F1 and F2 it is understood that the frequencies of those stations, through falling within the same prescribed range of frequencies, differ at least slightly so as to avoid interfering with one another. Those different frequencies within the band are assigned by the telephone company to the stations.

Thus telecommunications satellites of existing design may be used in the present system. The present invention encompasses within its scope any type of telecommunications satellite, either smart or dumb Those skilled in the art recognize that the present invention is not dependent upon the kind or type of telecommunications satellite employed and does not depend upon any particular kind of special satellite structure or details. Accordingly, those known details of known telecommunications satellites need not be here further described.

It is appreciated that the foregoing symbolic illustration of the telephone system is very simplified and does not detail, even in block form, the various known forms of equipment found in conventional practice in the system to carry out all aspects of long distance or local call switching-and routing selection circuits and billing equipment and the like, which are implicitly present in the system, as such detail is not necessary to an understanding of the invention and would serve to obfuscate a clear understanding of the present invention.

In operation of the system presented in Figure 1, should a person initiate a telephone call from mobile unit 3 by going "off hook", the station sends RF at frequency F1, modulated to indicate an off hook condition. That RF is directly picked up by the satellite then covering the area, satellite 1 in the illustration, which picks up the signal at antenna 2. The satellite in turn translates and sends a signal via antenna 2' at frequency F2 to the underlying telephone exchange 9 via the latter antenna 10. When a circuit is available, usually almost instantaneously, exchange 9 signals back to the satellite and the satellite in turn via the same frequency F2 sends a code which permits station 3 to dial another station, as by punching in the "touch tone" keys on the callers station. The satellite in turn receives that information as a form of modulation on the RF at carrier frequency F1, and, in the situation of a standard telecommunications satellite, translates and retransmits that information at carrier frequency F2 to the telephone exchange. Telephone exchange 9 thereupon sets up the connection to the called party using conventional circuits, the details of which are known to those skilled in this art and need not be here presented.

The called station, for example, may be fixed station 7, in which event the exchange establishes a connection, does the conventional test of the fixed stations lines for a busy condition, and, if available, supplies a suitable ringing current over telephone line 13, which causes the called partys telephone to produce an audible signal, to ring. When the called party answers at fixed station 7, the person speaks into the telephone transmitter, the microphone, and that audio message is transmitted over the telephone line to the telephone exchange. In turn the telephone exchange applies that audio signal as modulation to the carrier of its RF transmitting equipment and transmits that at F1 to the satellite. In conventional manner satellite 1, translates that to frequency F2 and downlinks same over the area covered, an area which includes mobile station 3 and also includes the telephone exchange 9 which sent the signal and now discards it.

A conversation may then be carried on between persons at mobile station 3 and fixed station 7. The audio modulated RF signal from the mobile station travels up to the satellite and then down to the exchange and station 7 in a single "hop" and vice versa with audio voice messages originating at station 7, resulting in a slight propagation delay as is elsewhere herein discussed in greater detail.

If instead of fixed station 7, a user at mobile station 3 desires to call mobile station 5, the interrelationship of the elements is somewhat different. In this situation telephone exchange 9, detecting a call to another mobile station, transmits station 5's frequency as modulation on carrier F2. Satellite 1 receives, translates and essentially broadcasts that signal in the covered area, which includes the area containing station 5.

Through local circuits in exchange 9, the exchange checks station 5 for a busy condition and on finding the station available issues an appropriate code that in turn causes a ringing signal at station 5. The exchange transmits the code as modulation on the RF carrier F1, which the satellite translates as before to RF carrier F2 and broadcasts that signal, F2, in the covered area below. Station 5 recognizes its code and actuates an audio circuit within the station that is emitted to signal an incoming call. In short, the telephone rings. Upon actuating station 5 to receive the call, the two mobile stations are placed into a communications link, allowing bi-lateral communications. In this case, the modulated frequencies emitted by mobile station 3 travel to the satellite and from there to exchange 9. In turn the exchange routes the signal back out of its antenna 10 to satellite 1, which in turn again broadcasts that signal to the other mobile station.

As is apparent the audio messages entered by the calling party takes two trips to the satellite and the central exchange, a "double hop", before being received at the second mobile station. This effectively doubles the propagation time and the time delay in comparison to the prior example with a fixed station. Even with such a "double hop" the propagation delay is less than that which occurs through use of a satellite at geostationary altitudes.

It is noted that it is possible to eliminate such a double hop in a mobile to mobile communication by modifying the system to incorporate a particular type of smart satellite. In such a satellite a processor would check the baseband information in the dial signal pulse train and check if a mobile station was being called. Should that be the case the processor would check its memory and transmit the telephone signal direct. The call would then be completed in a single hop.

Propagation delay is related to the satellites height above the earth. As RF travels at essentially the speed of light, the higher the satellite, the greater is the propagation delay. With the present invention, the propagation delay from a cellular station to the satellite in view is no larger than 60 milliseconds; the propagation delay from the satellite down to the earth based exchange is also no larger than 60 milliseconds. The single hop transmission time, thus, is no greater than 120 milliseconds. As example at the 10400 Km (5,600 nautical mile) altitude the one hop propagation time from two stations both located essentially underlying the satellite is 69 milliseconds; while the maximum propagation delay of two stations spaced apart at the minimum elevation angle of ten degrees is 96 milliseconds.

The relationship between station to station propagation time and satellite altitude in a single hop from the ground station to the satellite and back again to ground, with the maximum range occurring when the satellite is at a minimum elevation of ten degrees, may be shown as follows:

| Satellite Altitude | Maximum Terminal to Satellite Propagation Range | Maximum Terminal to Terminal Propagation Time |
|---|---|---|
| Km (n.mi.) | Km (n.mi) | (m.sec.) |
| 8334 (4500) | 12157 (6564) | 81 |
| 9260 (5000) | 13173 (7113) | 88 |
| 10186 (5500) | 14179 (7656) | 94 |
| 11112 (6000) | 15170 (8191) | 101 |
| 12038 (6500) | 16157 (8724) | 108 |
| 12964 (7000) | 17140 (9255) | 115 |
| 13890 (7500) | 18116 (9782) | 121 |

Coverage denotes the geographic region which may be effectively handled by the RF reception and transmission characteristics of the particular satellite, the underlying regions on a planet, the earth, with which the satellite is capable of communicating. As example if one were distant enough from the earth and considering line of sight, one would visually cover a hemisphere. As one moved the satellite lower to the earth, one then could only view of portion of a hemisphere. The same holds true for a satellite containing a given antenna and receiver sensitivity as the satellite is moved closer to or farther from the earth. Of course, by making the satellites antennas highly directional, then the more limited the region that the satellite may cover.

The present system employs a constellation of satellites with the satellites thereof located in three inclined orbit planes. The orbital planes are evenly spaced about the planet with their ascending nodes, which are taken at the earth's equator, 0 degrees latitude, being 120 degrees apart. The maximum distance above the earth attained by any orbit is in the range between 7400 to 13890 Km (4,000 and 7,500 nautical miles) above the earth, which is referred to as "medium earth" orbit.

With a circular orbit the satellites remain within the medium earth orbit range at all times.

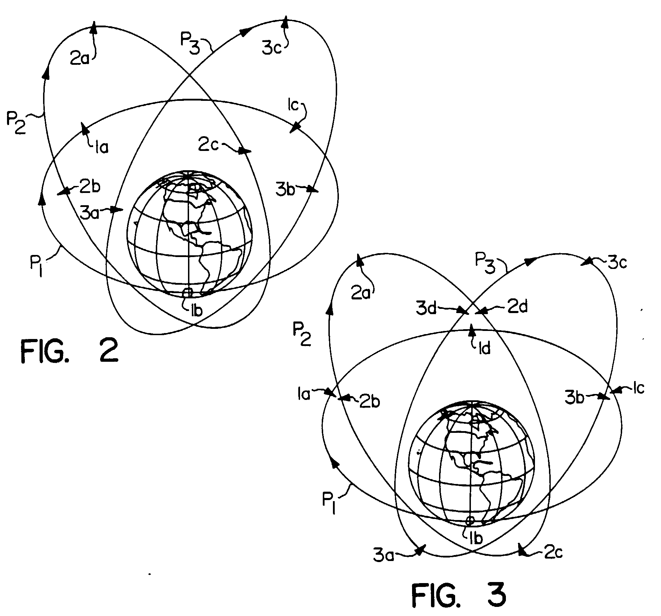

Considering a first constellation in greater detail, as generally illustrated in Figure 2, a series of 9 telecommunications satellites, which are of conventional structure, labeled 1a-1c, 2a-2c, and 3a-3c, are evenly divided between and arranged in three orbital planes, P1, P2 and P3, illustrated by the circles about planet E, representing the earth. Three of the satellites, 1a, 1b and 1c, are located in orbital plane P1 and travel at the same velocity and in the same direction in the same circular orbit. Those satellites are evenly spaced from one another by 120 degrees of arc.

Each satellite travels in a circular orbit of altitude above the earth of 10400 Km (5600 nautical miles). One of the satellites is hidden from view behind the planet and is represented in dotted lines. Each orbital plane is inclined at an angle of 55 degrees relative to the equatorial plane of the earth, represented as zero degrees latitude. The ascending node spacing is 120 degrees. Satellites 2a, 2b and 2c in plane P2 and Satellites 3a, 3b and 3c in plane P3 are the same. Within each orbit the satellites are evenly spaced apart, travel at the same velocity and at the same altitud of 10400 Km (5600 nautical miles) above the earth. Except for the different planes and relative phasing the three orbits are otherwise identical.

The relative phasing angle between satellites in adjacent orbit planes is 80 degrees. Thus before one satellite in the constellation disappears from view, as observed from a covered location on earth, at least one additional satellite comes into view above an elevation angle of ten degrees. The minimum ground elevation angle is ten degrees. The foregoing constellation provides global coverage with single coverage for each location on the earth.

To provide double coverage globally using the three circular orbits of the preceding example, the number of satellites in each orbit is increased by one to provide a total of 4 satellites per orbital plane spaced apart 360/4 or 90 degrees; a total of 12 satellites. This is illustrated in Figure 3 in which the designations given to the elements of Fig. 2 are retained to assist in understanding the subject. This figure contains satellites la-ld, 2a-2d and 3a-3d. The relative phasing between satellites in adjacent orbit planes is 90 degrees. That is, the phasing between satellites la and 2a is 90 degrees, between 2a and 3a is 90 degrees and so on. The remaining elements defining the orbits in this example are the same as in the foregoing example.

The foregoing constellations are conveniently tabulated in the table which follows in this specification.

| Constellation | | |
|---|---|---|
| | Coverage Global | |
| | Single | Double |
| Number of Satellites | 9 | 12 |
| Number Orbit Planes | 3 | 3 |
| Satellites per Plane | 3 | 4 |
| Apogee Altitude (Km) | 10400 Km (5600 nmi) | 10400 Km (5600 nmi) |
| Perigee Altitude (Km) | 10400 Km (5600 nmi) | 10400 Km (5600 nmi) |
| Inclination(degrees) | 55 | 55 |
| Ascending Node Spacing | 120° | 120° |
| Argument of Perigee | 0 | 0 |
| Relative Phasing between Satellites in Adjacent Orbit Planes. | 80° | 90° |
| Minimum Ground Elevation Angle | 10° | 10° |

Circular orbits do not favor either northern or southern latitudes and therefore tend to provide global coverage.

In low earth orbit, such as under 7408 Km (4000 nautical miles) altitude, the satellite encounters the Van Allen radiation belt. This region is characterized by harmful radiation. Hence satellites which progress through the radiation belt must be protected from that radiation to prevent premature failure of electronic equipment, particularly semiconductor circuits.

In the foregoing constellations, the satellites, as seen from a fixed ground location, move across the sky. As one satellite moves off the horizon, at least one other satellite will have appeared in view at or above an elevation of ten degrees.

The much lower than geostationary altitude or the present constellations reduces the transmit power requirements on both the satellite and on the ground, while permitting high quality telephonic communication. With a telecommunications satellite having a conventional size antenna the present systems allows hand held mobile cellular stations containing omnidirectional antennas to employ as little as one half watt RF power, which is the power level of the most compact hand held units currently being marketed in the U.S.A. By contrast a one half watt cellular station used with a geostationary satellite would require an extremely large satellite antenna at the L-band mobile frequencies currently allocated by the U.S. Federal Communications Commission.

An advantage to the present invention is that the practical implementation may be accomplished in at least two stages, with the latter stages providing enhancement of the system as a result of actual experience learned when the system is operational. Thus the constellation of Figure 2 may be formed initially with nine satellites and, thereafter, the system may be expanded by an additional three satellites to provide a minimum of double coverage on a worldwide basis to attain the constellation of Figure 3.

The small number of orbit planes required by the present system initially affords considerable flexibility in launching. Up to three satellites can be combined in a single launch resulting in a less expensive installation.

The satellites carry thrusters that are controlled by appropriate ground control stations. Thrusters are conventional positioning and control accessories and assist in the assembly of the constellation, permitting the ground control to retard a satellite or to accelerate a satellite, to move it forward or backward in the orbit. Thus as example in the assembly of the described constellations, three satellites may be carried aloft in a single launch vehicle, such as a rocket or engine, and released at a single point in orbit. The ground control may operate the thruster on a first satellite to cause it to slow it down, while the thruster of the third satellite is operated to push forward. Thereby the three satellites may be positioned apart 120 degrees about the periphery of the same circular orbit after being dropped off together by the launch vehicle. With three separate orbits, of course, the groups of satellites are carried aloft in at least three separate launch vehicle and positioned in the aforedescribed manner or, alternatively if the launch vehicle is a re-useable one, such as a shuttle type, it is used on three different occasions to fill the three orbits.

An additional advantage of the latter constellation is that in the event a single satellite in the system fails, continued service would still be provided on a worldwide basis with a reduced number of telephone links possible, until the failed satellite is repaired or replaced and full service restored. As a satellites operational life depends upon its length of service in space flight, the addition of three satellites at a later date, also means that at least those three will continue in service beyond the end of operation life to the initial nine satellites, spreading replacement cost over time while always maintaining some portion of the system in service.

A unique advantage to the present system is that it is often possible to handle some intercontinental telephone calls in a single hop without the necessity of using the regular geostationary satellite or underseas cable as part of the link. More specifically the system permits a single satellite to provide coverage of an area containing a pair of points in Europe and North America or, alternatively, in North America and Japan. Thus an international telephone call is possible by satellite that does not have the inconvenient propagation delays of geostationary satellite systems.

In the preceding discussion telephony has been discussed in connection with transmission and reception of voice messages, the spoken words. However, as those skilled in the art appreciate audio signals other than voice messages are now applied to the telephone lines. As example, through use of accessory modems computer data may be sent as audio frequency signals over the telephone line. Likewise facsimile machines are coupled to the telephone lines by an associated modem and send copies of documents to a distant facsimile machine by means of audio frequency signals produced by the associated modem. Although voice messages are the principal driving force for cellular communications, it is understood that those additional examples using audio transmissions are included within the scope of telephonic communications as used in this specification.

It is believed that the foregoing description of the preferred embodiments of the invention is sufficient in detail to enable one skilled in the art to make and use the invention. However, it is expressly understood that the detail of the elements which is presented for the foregoing purpose is not intended to limit the scope of the invention, in as much as modifications thereof, all of which come within the scope of the invention, become apparent to those skilled in the art upon reading this specification Thus the invention is to be construed within the full scope of the appended claims.

## Claims

1. A cellular telecommunications system, comprising:
- at least one handheld mobile cellular telephone station (5), said handheld mobile cellular telephone station (5) including means for transceiving radio frequency energy (RF) including an omnidirectional antenna (6);
- at least one telephone exchange (9) including an antenna (10) for transceiving radio frequency energy (RF) and being spaced from said mobile cellular telephone station (5) within a predetermined region of the earth, with the telephone exchange (9) being connected to a fixed telephone station (7);
- a satellite constellation located in space over the earth and including apparatus for transceiving radio frequency energy (RF) for providing a radio frequency energy communication link with said mobile cellular telephone station (5) and said telephone exchange (9); wherein
- said satellite constellation comprises a plurality of telecommunications satellites (1a-1c, 2a-2c, 3a-3c);
- said plurality of telecommunications satellites (1a-1c, 2a-2c, 3a-3c) being spaced and moving in a plurality of orbits (P1, P2, P3) about the earth with the movement of said satellites (1a-1c, 2a-2c, 3a-3c) being non-synchronous to the rotation of the earth, and
- said plurality of orbits (P1, P2, P3) being circular,
characterized by
- all of said plurality of telecommunications satellites (1a-1c, 2a-2c, 3a-3c) being at an altitude between 7400 km (4000 nmi) and 13890 km (7500 nmi) above the earth;
- at least one of said telecommunications satellites (1a-1c, 2a-2c, 3a-3c) being in the line of sight to both said mobile cellular telephone station (5) and said telephone exchange (9) at any instant of time, with said line of sight being at a minimum elevation angle of no less than 10°;
- the radio frequency energy (RF) propagation time between said satellite and each of said mobile cellular telephone station (5), and said telephone exchange (9) being less than 60 msec; and
- said telecommunications satellites (1a-1c, 2a-2c, 3a-3c) having receiving sensitivity and antennas permitting reception at said altitude of signals from said handheld mobile cellular telephone station (5).

2. The cellular telecommunications system according to claim 1, including the provision of a relative phase separation between the telecommunications satellites (1a-1c, 2a-2c, 3a-3c) in adjacent orbits such that before one of said telecommunications satellites (1a-1c, 2a-2c, 3a-3c) drops below said minimum elevation angle at least an additional one of said telecommunications satellites (1a-1c, 2a-2c, 3a-3c) comes into view above said minimum elevation angle.

3. The cellular telecommunications system according to claim 1, wherein said orbits (P1, P2, P3) have an altitude of 10400 km (5600 nmi) above the earth.

4. The cellular telecommunications system according to claim 1, wherein said orbits (P1, P2, P3) are inclined at an inclination angle of 55° relative to the equatorial plane of the earth.

5. The cellular telecommunications system according to claim 1, wherein the number of orbits (P1, P2, P3) is three.

6. The cellular telecommunications system according to claim 1, wherein said telecommunications satellites (1a-1c, 2a-2c, 3a-3c) within one orbit (P1, P2, P3) are evenly spaced from one another.

7. The cellular telecommunications system according to claim 5, wherein said orbits (P1, P2, P3) are spaced about the equator of the earth with their ascending nodes by 120°.

8. The cellular telecommunications system according to claim 7, wherein the number of telecommunications satellites (1a-1c, 2a-2c, 3a-3c) per orbit (P1, P2, P3) is three to provide single coverage.

9. The cellular telecommunications system according to claim 7, wherein the number of telecommunications satellites (1a-1c, 2a-2c, 3a-3c) per orbit (P1, P2, P3) is four to provide double coverage.

10. The cellular telecommunications system according to claim 1, wherein all of said plurality of telecommunications satellites (1a-1c, 2a-2c, 3a-3c) are at an altitude between 8334 km (4500 nmi) and 13890 km (7500 nmi) above the earth; and
- the radio frequency energy (RF) propagation time between said satellite and each of said mobile cellular telephone station (5) and said telephone exchange (9) is more than 40.5 msec and less than 60 msec.

11. The cellular telecommunications system according to claim 1, wherein each of said telecommunications satellites (1a-1c, 2a-2c, 3a-3c) is effectively a repeater.

12. The cellular telecommunications system according to claim 11, wherein said repeater is designed to
- receive radio frequency energy (RF) of one frequency band (F1) at its receiving antenna (2) from said predetermined region of the earth,
- translate that received radio frequency energy (RF) to an intermediate frequency (IF),
- amplify that intermediate frequency (IF), and to
- convert the intermediate frequency (IF) to another frequency (F2) for output, at a transmitting antenna (2') to said predetermined region of the earth.

13. The cellular telecommunications system according to claim 1, wherein each of said telecommunications satellites (1a-1c, 2a-2c, 3a-3c) includes multiple radio frequency energy output beams independently directed to selected portions of said predetermined region of the earth.

14. The cellular telecommunications system according to claim 1, wherein each of said telecommunications satellites (1a-1c, 2a-2c, 3a-3c) has antennas consisting of antennas (2, 2') of appropriate size to enable communications with one half watt power mobile cellular stations (3, 5) and for communication with said telephone exchange.

15. A method of cellular telecommunications comprising the steps of:
- initiating a telephonic communications session between a handheld mobile cellular telephone station (5), said handheld mobile cellular telephone station (5) including means for transceiving radio frequency energy (RF), and a fixed telephone station (7), said fixed telephone station (7) being connected to a telephone exchange (9) including an antenna (10) for transceiving radio frequency energy (RF), and said telephone exchange (9) being spaced from said mobile cellular telephone station (5) within a predetermined region of the earth, by transmitting a radio frequency energy (RF) signal from said mobile cellular telephone station (5) through an omnidirectional antenna (6) to be received by at least one satellite (1) of a predetermined constellation of telecommunications satellites (la-lc, 2a-2c, 3a-3c) for providing an RF communication link between said mobile cellular telephone station (**5**) and said telephone exchange (9);
wherein
- said satellite constellation comprises a plurality of telecommunications satellites (1a-1c, 2a-2c, 3a-3c);
- said plurality of telecommunications satellites (1a-1c, 2a-2c, 3a-3c) are spaced and moving in a plurality of orbits (P1, P2, P3) about the earth with the movement of said satellites (1a-1c, 2a-2c, 3a-3c) being non-synchronous to the rotation of the earth, and
- said plurality of orbits (P1, P2, P3) are circular,
- all of said plurality of telecommunications satellites (1a-1c, 2a-2c, 3a-3c) are at an altitude between 7400 km (4000 nmi) and 13890 km (7500 nmi) above the earth;
- at least one of said telecommunications satellites (1a-1c, 2a-2c, 3a-3c) is in the line of sight to both said mobile cellular telephone station (5) and said telephone exchange (9) at any instant of time, with said line of sight being at a minimum elevation angle of no less than 10°;
- the radio frequency energy (RF) propagation time between said satellite and each of said mobile cellular telephone station (5) and said telephone exchange (9), is less than 60 msec;
- said telecommunications satellites have receiving sensitivity and antennas permitting reception at said altitude of signals emitted from a mobile cellular telephone station (5) having an omnidirectional antenna with an RF power level of one half watt, and
- retransmitting said RF signal through an antenna of said satellite (1) to said telephone exchange (9) to be received at said telephone exchange (9) and establishing a communication link between said said telephone exchange (9) and said mobile cellular telephone station (5).

## Patentansprüche

1. Ein zellulares Telekommunikationssystem mit:
- wenigstens einer handgehaltenen mobilen zellularen Telefonstation (5), wobei die handgehaltene mobile zellulare Telefonstation (5) Mittel aufweist zum Senden/Empfangen von Radiofrequenzenergie (RF) mit einer ungerichteten Antenne (6);
- wenigstens einer Telefonvermittlung (9), die eine Antenne (10) zum Senden/Empfangen von Radiofrequenzenergie (FR) aufweist und die von der mobilen zellularen Telefonstation (5) innerhalb einer vorbestimmten Region der Erde beabstandet ist, wobei die Telefonvermittlung (9) mit einer festen Telefonstation (7) verbunden ist;
- einer Satellitenkonstellation, die im Weltraum über der Erde angeordnet ist und Geräte zum Senden/Empfangen von Radiofrequenzenergie (FR) aufweist um eine Radiofrequenzenergie-Kommunikationsverbindung mit der mobilen zellularen Telefonstation (5) und der Telefonvermittlung (9) bereitzustellen; wobei
- die Satellitenkonstellation eine Vielzahl von Telekommunikationssatelliten (1a-1c, 2a-2c, 3a-3c) aufweist;
- die Vielzahl von Telekommunikationssatelliten (1a-1c, 2a-2c, 3a-3c) voneinander beabstandet sind und sich in einer Vielzahl von Orbitalbahnen (P1, P2, P3) um die Erde bewegen, wobei die Bewegungen der Satelliten (1a-1c, 2a-2c, 3a-3c) nicht-synchron zu der Rotation der Erde sind, und
- die Vielzahl von Orbitalbahnen (P1, P2, P3) kreisförmig sind;
dadurch gekennzeichnet, daß
- alle der Vielzahl von Telekommunikationssatelliten (1a-1c, 2a-2c, 3a-3c) sich in einer Höhe zwischen 7400 km (4000 nmi) und 13.890 km (7500 nmi) über der Erde befinden;
- wenigstens einer der Telekommunikationssatelliten (1a-1c, 2a-2c, 3a-3c) sich zu jedem Zeitpunkt sowohl in der Sichtlinie zu der mobilen zellularen Telefonstation (5) als auch zu der Telefonvermittlung (9) befindet, wobei die Sichtlinie einen Minimum-Erhebungswinkel von nicht weniger als 10° hat;
- die Radiofrequenzenergie (RF)-Ausbreitungszeit zwischen dem Satelliten und sowohl der mobilen zellularen Telefonstation (5) als auch der Telefonvermittlung (9) weniger als 60 msec beträgt; und
- die Telekommunikationssatelliten (1a-1c, 2a-2c, 3a-3c) eine Empfangsempfindlichkeit und Antennen haben, die in dieser Höhe einen Empfang von Signalen von der handgehaltenen mobilen zellularen Telefonstation (5) erlauben.

2. Das zellulare Telekommunikationssystem nach Anspruch 1, bei dem vorgesehen ist, daß eine relative Phasentrennung zwischen den Telekommunikationssatelliten (1a-1c, 2a-2c, 3a-3c) in benachbarten Orbitalbahnen so ist, daß bevor einer der Telekommunikationssatelliten (1a-1c, 2a-2c, 3a-3c) unter den Minimum-Erhebungswinkel fällt, wenigstens ein zusätzlicher der Telekommunikationssatelliten (1a-1c, 2a-2c, 3a-3c) oberhalb des Minimum-Erhebungswinkels sichtbar wird.

3. Das zellulare Telekommunikationssystem nach Anspruch 1, bei dem die Orbitalbahnen (P1, P2, P3) eine Höhe von 10.400 km (5.600 nmi) über der Erde haben.

4. Das zellulare Telekommunikationssystem nach Anspruch 1, bei dem die Orbitalbahnen (P1, P2, P3) in einem Neigungswinkel von 55° relativ zur Äquatorialebene der Erde geneigt sind.

5. Das zellulare Telekommunikationssystem nach Anspruch 1, bei dem die Anzahl der Orbitalbahnen (P1, P2, P3) drei beträgt.

6. Das zellulare Telekommunikationssystem nach Anspruch 1, bei dem die Telekommunikationssatelliten (1a-1c, 2a-2c, 3a-3c) in einem Orbit (P1, P2, P3) gleichmäßig voneinander beabstandet sind.

7. Das zellulare Telekommunikationssystem nach Anspruch 5, bei dem die Orbitalbahnen (P1, P2, P3) um den Äquator der Erde mit ihren aufsteigenden Knoten um 120° beabstandet sind.

8. Das zellulare Telekommunikationssystem nach Anspruch 7, bei dem die Anzahl der Telekommunikationssatelliten (1a-1c, 2a-2c, 3a-3c) pro Orbitalbahn (P1, P2, P3) drei beträgt um eine einfache Überdeckung bereitzustellen.

9. Das zellulare Telekommunikationssystem nach Anspruch 7, bei dem die Anzahl der Telekommunikationssatelliten (1a-1c, 2a-2c, 3a-3c) pro Orbitalbahn (P1, P2, P3) vier beträgt um eine doppelte Abdeckung bereitzustellen.

10. Das zellulare Telekommunikationssystem nach Anspruch 1, bei dem alle der Vielzahl von Telekommunikationssatelliten (1a-1c, 2a-2c, 3a-3c) sich in einer Höhe zwischen 8334 km (4500 nmi) und 13890 km (7500 nmi) über der Erde befinden; und die Radiofrequenzenergie (RF)-Ausbreitungszeit zwischen dem Satelliten und sowohl der mobilen zellularen Telefonstation (5) als auch der Telefonvermittlung (9) mehr als 40,5 msec. und weniger als 60 msec. beträgt.

11. Das zellulare Telekommunikationssystem nach Anspruch 1, bei dem jeder Telekommunikationssatelliten (1a-1c, 2a-2c, 3a-3c) effektiv ein Repeater ist.

12. Das zellulare Telekommunikationssystem nach Anspruch 11, bei dem der Repeater dazu eingerichtet ist,
- Radiofrequenzenergie (RF) eines Frequenzbandes (F1) an seiner Empfangsantenne (2) von der vorbestimmten Region der Erde zu empfangen,
- die empfangene Radiofrequenzenergie (RF) in eine Zwischenfrequenz (IF) umzusetzen,
- die Zwischenfrequenz (IF) zu verstärken, und
- die Zwischenfrequenz in eine andere Frequenz (F2) zum Ausgeben an einer Sendeantenne (2') in die vorbestimmte Region der Erde umzuwandeln.

13. Das zellulare Telekommunikationssystem nach Anspruch 1, bei dem jeder der Telekommunikationssatelliten (1a-1c, 2a-2c, 3a-3c) mehrere Radiofrequenzausgangsstrahlen aufweist, die unabhängig voneinander zu ausgewählen Bereichen der vorbestimmten Regionen der Erde gerichtet sind.

14. Das zellulare Telekommunikationssystem nach Anspruch 1, bei dem jeder der Telekommunikationssatelliten (1a-1c, 2a-2c, 3a-3c) Antennen hat, die aus Antennen (2, 2') geeigneter Größe bestehen, um Kommunikation mit mobilen zellularen Stationen (5) mit einhalb Watt Leistung und Kommunikation mit der Telefonvermittlung ermöglichen.

15. Ein Verfahren zellularer Telekommunikation mit den Schritten:
- Einleiten eines telefonischen Telekommunikationsvorgangs zwischen einer handgehaltenen mobilen zellularen Telefonstation (5), wobei die handgehaltene mobile zellulare Telefonstation eine Einrichtung zum Senden/Empfangen von Radiofrequenzenergie (RF) aufweist, und einer festen Telefonstation (7), wobei die feste Telefonstation (7) mit einer Telefonvermittlung (9) verbunden ist, die eine Antenne (10) aufweist, um Radiofrequenzenergie (RF) zu senden/empfangen, und wobei die Telefonvermittlung (9) von der mobilen zellularen Telefonstation (5) innerhalb einer vorbestimmten Region der Erde beabstandet ist, durch Aussenden eines Radiofrequenzenergie (RF)-Signals von der mobilen zellularen Telefonstation (5) durch eine ungerichtete Antenne (6) um durch wenigstens einen Satelliten (1) einer vorbestimmten Konstellation von Telekommunikationssatelliten (1a-1c, 2a-2c, 3a-3c) empfangen zu werden zum Bereitstellen einer (RF) Kommunikationsverbindung zwischen der mobilen zellularen Telefonstation (5) und der Telefonvermittlung (9);
wobei
- die Satellitenkonstellation eine Vielzahl von Telekommunikationssatelliten (1a-1c, 2a-2c, 3a-3c) aufweist;
- die Vielzahl von Telekommunikationssatelliten (1a-1c, 2a-2c, 3a-3c) voneinander beabstandet sind und sich in einer Vielzahl von Orbitalbahnen (P1, P2, P3) um die Erde bewegen, wobei die Bewegung der Satelliten (1a-1c, 2a-2c, 3a-3c) nicht-synchron zu der Rotation der Erde ist, und
- die Vielzahl von Orbitalbahnen (P1, P2, P3) kreisförmig sind,
- alle der Vielzahl von Telekommunikationssatelliten (1a-1c, 2a-2c, 3a-3c) sich in einer Höhe zwischen 7400 km (4000 nmi) und 13890 km (7500 nmi) über der Erde befinden;
- wenigstens einer der Telekommunikationssatelliten (1a-1c, 2a-2c, 3a-3c) sich zu jedem Zeitpunkt sowohl in der Sichtlinie zu der mobilen zellularen Telefonstation (5) als auch der Telefonvermittlung (9) befindet, wobei die Sichtlinie einen Minimum-Erhebungswinkel von nicht weniger als 10° hat;
- die Radiofrequenzenergie (RF) - Ausbreitungszeit zwischen dem Satelliten und sowohl der mobilen zellularen Telefonstation (5) als auch der Telefonvermittlung (9) weniger als 60 msec. beträgt,
- die Telekommunikationssatelliten eine Empfangsempfindlichkeit und Antennen haben, die in dieser Höhe einen Empfang von einer mobilen zellularen Telefonstation (5) mit einer ungerichteten Antenne bei einem RF-Leistungspegel von einem halben Watt aus gesendeten Signalen erlauben, und
- Wiederaussenden des RF-Signals durch eine Antenne des Satelliten (1) an die Telefonvermittlung (9), um von der Telefonvermittlung (9) empfangen zu werden und Einrichten einer Kommunikationsverbindung zwischen der Telefonvermittlung (9) und der mobilen zellularen Telefonstation (5).

## Revendications

1. Système de télécommunications cellulaires, comprenant :
- au moins une station de téléphone cellulaire mobile portable (5), cette station de téléphone cellulaire portable (5) comprenant des moyens pour émettre et recevoir une énergie de fréquence radio (RF) comprenant une antenne omnidirectionnelle (6) ;
- au moins un central téléphonique (9) comprenant une antenne (10) pour émettre et recevoir l'énergie de fréquence radio (RF) et étant espacé de la station de téléphone cellulaire mobile (5) à l'intérieur d'une région prédéterminée de la terre, avec le central téléphonique (9) et raccordé à une station de téléphone fixe (7) ;
- une constellation de satellites située dans l'espace au-dessus de la terre et comprenant des appareils pour émettre et recevoir l'énergie de fréquence radio (RF) pour fournir une liaison de communication à énergie de fréquence radio avec la station de téléphone cellulaire mobile (5) et le central téléphonique (9) ;
dans lequel
- la constellation de satellites comprend une pluralité de satellites de télécommunications (1a-1c, 2a-2c, 3a-3c) ;
- cette pluralité de satellites de télécommunications (1a-1c, 2a-2c, 3a-3c) étant espacée et se déplaçant dans une pluralité d'orbites (P1, P2, P3) autour de la terre avec le mouvement des satellites (1a-1c, 2a-2c, 3a-3c) non synchrone par rapport à la rotation de la terre, et
- la pluralité d'orbites (P1, P2, P3) étant circulaire,
caractérisé en ce que
- toute cette pluralité de satellites de télécommunications (1a-1c, 2a-2c, 3a-3c) se situe en altitude entre 7400 km (4000 milles nautiques) et 13890 km (7500 milles nautiques) au-dessus de la terre ;
- au moins l'un de ces satellites de télécommunications (1a-1c, 2a-2c, 3a-3c) étant dans la ligne de visée à la fois de la station de téléphone cellulaire mobile (5) et de le central téléphonique (9) à tout instant, avec la ligne de visée à un angle d'élévation minimum non inférieur à 10° ;
- le temps de propagation de l'énergie de fréquence radio (RF) entre le satellite et chacune des stations de téléphone cellulaire mobile (5) et de le central téléphonique (9) étant inférieur à 60 msec ; et
- les satellites de télécommunications (1a-1c, 2a-2c, 3a-3c) ayant une sensibilité de réception et une antenne permettant la réception à l'altitude des signaux à partir de la station de téléphone cellulaire mobile portable (5).

2. Système de télécommunications cellulaires selon la revendication 1, comprenant la mise en place d'une séparation de phase relative entre les satellites de télécommunications (1a-1c, 2a-2c, 3a-3c) dans des orbites contiguës de telle sorte qu'avant que l'un de ces satellites de télécommunications (1a-1c, 2a-2c, 3a-3c) ne descende au-dessous de l'angle de l'élévation minimum, au moins un satellite supplémentaire parmi ces satellites de télécommunications (1a-1c, 2a-2c, 3a-3c) arrive en vue au-dessus de l'angle d'élévation minimum.

3. Système de télécommunications cellulaires selon la revendication 1, dans lequel deux orbites (P1, P2, P3) ont une altitude de 10400 km au-dessus de la terre.

4. Système de télécommunications cellulaires selon la revendication 1, dans lequel les orbites (P1, P2, P3) sont inclinées à un angle d'inclinaison de 55° par rapport au plan équatorial de la terre.

5. Système de télécommunications cellulaires selon la revendication 1, dans lequel les orbites (P1, P2, P3) sont au nombre de trois.

6. Système de télécommunications cellulaires selon la revendication 1, dans lequel les satellites de télécommunications (1a-1c, 2a-2c, 3a-3c) à l'intérieur d'une orbite (P1, P2, P3) sont espacés de façon égale l'un de l'autre.

7. Système de télécommunications cellulaires selon la revendication 5, dans lequel les orbites (P1, P2,P3) sont espacées sur l'équateur de la terre avec leurs noeuds ascendants à 120°.

8. Système de télécommunications cellulaires selon la revendication 7, dans lequel le nombre de satellites de télécommunications (1a-1c, 2a-2c, 3a-3c) par orbite (P1, P2, P3) est de trois pour fournir une couverture simple.

9. Système de télécommunications cellulaires selon la revendication 7, dans lequel les satellites de télécommunications (1a-1c, 2a-2c, 3a-3c) par orbite (P1, P2, P3) sont au nombre de quatre pour fournir une double couverture.

10. Système de télécommunications cellulaires selon la revendication 1, dans lequel toute cette pluralité de satellites de télécommunications (1a-1c, 2a-2c, 3a-3c) se trouve à une altitude entre 8334 km (4500 milles nautiques) et 13890 km (7500 milles nautiques) au-dessus de la terre ; et
- le temps de propagation de l'énergie de fréquence radio (RF) entre le satellite et chacune des stations de téléphone cellulaire mobile (5) et ce central téléphonique (9) est supérieur à 40,5 msec et inférieur à 60 msec.

11. Système de télécommunications cellulaires selon la revendication 1, dans lequel chacun des satellites de télécommunications (1a-1c, 2a-2c, 3a-3c) est effectivement un répétiteur.

12. Système de télécommunications cellulaires selon la revendication 11, dans lequel le répétiteur est conçu pour
- recevoir l'énergie de fréquence radio (RF) d'une bande de fréquence (F1) à son antenne de réception (2) à partir de la région prédéterminée de la terre,
- traduire l'énergie de fréquence radio reçue (RF) en une fréquence intermédiaire (IF),
- amplifier cette fréquence intermédiaire (IF), et
- convertir la fréquence intermédiaire (IF) en une autre fréquence (F2) pour la sortie, à une antenne de transmission (2') à destination de cette région prédéterminée de la terre.

13. Système de télécommunications cellulaires selon la revendication 1, dans lequel chacun des satellites de télécommunications (1a-1c, 2a-2c, 3a-3c) comprend des faisceaux de sortie d'énergie de fréquence radio multiple dirigés indépendamment sur des portions sélectionnées de la région prédéterminée de la terre.

14. Système de télécommunications cellulaires selon la revendication 1, dans lequel chacun des satellites de télécommunications (1a-1c, 2a-2c, 3a-3c) possède des antennes constituées par des antennes (2, 2') de dimension appropriée pour permettre des communications avec des stations cellulaires mobiles d'une puissance d'un demi-watt (3, 5) et pour la communication avec le central téléphonique.

15. Procédé pour les télécommunications cellulaires comprenant les étapes consistant à :
- lancer une série de communications téléphoniques entre une station de téléphone cellulaire mobile portable (5), cette station de téléphone cellulaire portable (5) comprenant des moyens pour émettre et recevoir l'énergie de fréquence radio (RF), et une station de téléphone fixe (7), cette station de téléphone fixe (7) étant connectée à un central téléphonique (9) comprenant une antenne (10) pour émettre et recevoir l'énergie de fréquence radio (RF) et ce central téléphonique (9) étant espacé de la station de téléphone cellulaire mobile (5) à l'intérieur d'une région prédéterminée de la terre,
- en transmettant un signal d'énergie de fréquence radio (RF) à partir de la station de téléphone cellulaire mobile (5) par une antenne omnidirectionnelle (6) pour être reçu par au moins un satellite (1) d'une constellation prédéterminée de satellites de télécommunications (1a-1c, 2a-2c, 3a-3c) pour fournir une liaison de communication RF entre la station de téléphone cellulaire mobile (5) et le central téléphonique (9) ;
dans lequel
- la constellation de satellites comprend une pluralité de satellites de télécommunications (1a-1c, 2a-2c, 3a-3c) ;
- cette pluralité de satellites de télécommunications (1a-1c, 2a-2c, 3a-3c) sont espacée et se déplaçant dans une pluralité d'orbites (P1, P2, P3) autour de la terre avec le mouvement des satellites (1a-1c, 2a-2c, 3a-3c) qui est non synchrone par rapport à la rotation de la terre, et
- la pluralité d'orbites (P1, P2, P3) sont circulaire,
- toute la pluralité de satellites de télécommunications (1a-1c, 2a-2c, 3a-3c) se situe à une altitude entre 7400 km (4000 milles nautiques) et 13890 km (7500 milles nautiques) au-dessus de la terre ;
- au moins l'un des satellites de télécommunications (1a-1c, 2a-2c, 3a-3c) se situe dans la ligne de visée à la fois de la station de téléphone cellulaire mobile (5) et du central téléphonique (9) à tout moment, avec la ligne de visée à un angle d'élévation minimum non inférieur à 10° ;
- le temps de propagation d'énergie de fréquence radio (RF) entre le satellite et chacune des stations de téléphone cellulaire mobile (5) et le central téléphonique (9) sont inférieur à 60 msec ;
- les satellites de télécommunications ont une sensibilité de réception et des antennes permettant la réception à l'altitude des signaux émis à partir d'une station de téléphone cellulaire mobile (5) ayant une antenne omnidirectionnelle avec un niveau de puissance RF d'un demi-watt, et
- en retransmettant le signal RF par une antenne du satellite (1) vers le central téléphonique (9) pour être reçu au niveau du central téléphonique (9) et établir une liaison de communication entre le central téléphonique (9) et la station de téléphone cellulaire mobile (5).
